# EUROPEAN PATENT SPECIFICATION

(11) **EP 2 958 023 B1**
(45) Date of publication and mention of the grant of the patent: **27.04.2022**
(21) Application number: 14751545.6
(22) Date of filing: 05.02.2014
(51) Int. Cl.: G06F 11/34, G05B 23/02

(54) **SYSTEM ANALYSIS DEVICE AND SYSTEM ANALYSIS METHOD**
SYSTEMANALYSEVORRICHTUNG UND SYSTEMANALYSEVERFAHREN
DISPOSITIF ET PROCÉDÉ D'ANALYSE DE SYSTÈME

(30) Priority: 18.02.2013 JP 2013028746
(43) Date of publication of application: 23.12.2015
(73) Proprietor: NEC Corporation, Tokyo 108-8001 (JP)
(72) Inventor: YABUKI, Kentarou, Tokyo 108-8001 (JP)
(74) Representative: Vossius & Partner Patentanwälte Rechtsanwälte mbB
(86) International application number: PCT/JP2014/000613
(87) International publication number: WO 2014/125796

(56) References cited:
- WO-A1-2011/155621
- WO-A1-2012/086824
- WO-A1-2012/128388
- JP-A- H07 168 619
- US-A1- 2010 205 483
- US-B1- 8 069 370

## Description

The present invention relates to a system analysis device and a system analysis method.

One example of an operation management system that models a system using time series information of system performance and determines a cause of a failure, an abnormality, or the like of the system using the generated model is described in JP-patent 4872944 B (PTL1).

The operation management system described in PTL 1 determines a correlation function that indicates a correlation of each pair among a plurality of metrics on the basis of measurement values of the plurality of metrics of the system to generate a correlation model of the system. Then, the operation management system detects destruction of the correlation (correlation destruction) using the generated correlation model, and determines a failure cause of the system on the basis of the correlation destruction. A technique for analyzing a state of the system on the basis of the correlation destruction in this manner is called an invariant relation analysis.

In the invariant relation analysis, one example of a technique for determining a failure cause on the basis of a similarity of states of correlation destruction between at the time of a failure in the past and at the present time is disclosed in WO 2010/032701 (PTL 2). An operation management device described in PTL 2 classifies metrics into several groups, and compares distributions of the number of metrics in which correlation destruction occurs in the respective groups between at the time of a failure in the past and at the present time. However, in the operation management device of PTL 2, even if metrics in which correlation destruction occurs are different in the groups, when the distributions of the number of metrics in which correlation destruction occurs in the respective groups are similar, it may be determined to be the same failure.

One example of a technique for solving the problem is disclosed in WO 2011/155621 (PTL 3). An operation management device described in PTL 3 compares patterns of correlations in which correlation destruction occurs (correlation destruction patterns) between at the time of a failure in the past and at the present time. By comparing corresponding ratios of the presence or absence of the occurrence of the correlation destruction in the respective correlations in a correlation model, the operation management device determines a cause of the failure.

WO2012/086824 A1 discloses a method for detecting a fault of a system by comparing detection results of correlation destruction for a common correlation among plural monitored objects, in particular by comparing, between monitored objects, detection results of correlation destruction to decide a monitored object on which a fault occurred is disclosed.

WO2012/128388 A1 discloses a method for updating detection order of correlation destruction for plural systems to reduce a delay in detecting a fault in invariant analysis for the plural systems with a correlation destruction pattern.

US2010/205483 A1 discloses a method for detecting a fault of a system by using a range of correlation collapse, in particular by comparing a percentage of correlation collapse for each correlation model with that at a time of a fault.

In the above-described technique of PTL 3, since the correlation destruction patterns are compared, a system at the time of a failure in the past and a system at the present time are required to be the same system having the same correlation model. In addition, unless failure locations at the time of a failure in the past and failure locations at the present time are the same, it is not determined to be the same failure.

For example, when there is a change in the correlation model of the system between at the time of a failure in the past and at the present time, by adding a device of the same type performing distributed processing, a failure cause cannot be determined using the correlation destruction pattern at the time of a failure in the past. In addition, when a device in which a failure occurred in the past and a device in which a failure has occurred at present are devices of the same type performing distributed processing, but different devices, a failure cause cannot be determined using the correlation destruction pattern at the time of a failure in the past.

An object of the present invention is to solve the above-described problem, and to provide a system analysis device and a system analysis method that can improve the versatility of a correlation destruction pattern, in state detection of a system using the correlation destruction pattern. This object is achieved with the features of the appended independent claims.

An exemplary embodiment of the present invention will be described.

Fig. 1 is a block diagram illustrating a characteristic configuration of an exemplary embodiment of the present invention.
Fig. 2 is a block diagram illustrating a configuration of a system analysis device 100 in an exemplary embodiment of the present invention.
Fig. 3 is a diagram illustrating an example of a monitored system in the exemplary embodiment of the present invention.
Fig. 4 is a flow chart illustrating aggregated destruction pattern generation processing in the exemplary embodiment of the present invention.
Fig. 5 is a flow chart illustrating abnormality level calculation processing in the exemplary embodiment of the present invention.
Fig. 6 is a diagram illustrating an example of a correlation model 122 in the exemplary embodiment of the present invention.
Fig. 7 is a diagram illustrating an example of a correlation map 125 in the exemplary embodiment of the present invention.
Fig. 8 is a diagram illustrating an example of a correlation destruction detection result in the exemplary embodiment of the present invention.
Fig. 9 is a diagram illustrating an example of a correlation destruction pattern 123 in the exemplary embodiment of the present invention.
Fig. 10 is a diagram illustrating another example of the correlation destruction detection result in the exemplary embodiment of the present invention.
Fig. 11 is a diagram illustrating another example of the correlation destruction pattern 123 in the exemplary embodiment of the present invention.
Fig. 12 is a diagram illustrating a generation example of an aggregated destruction pattern 124 in the exemplary embodiment of the present invention.
Fig. 13 is a diagram illustrating another example of the correlation destruction detection result in the exemplary embodiment of the present invention.
Fig. 14 is a diagram illustrating another example of the correlation destruction pattern 123 in the exemplary embodiment of the present invention.
Fig. 15 is a diagram illustrating a calculation example of a similarity in the exemplary embodiment of the present invention.
Fig. 16 is a diagram illustrating an example of a display screen 300 in the exemplary embodiment of the present invention.

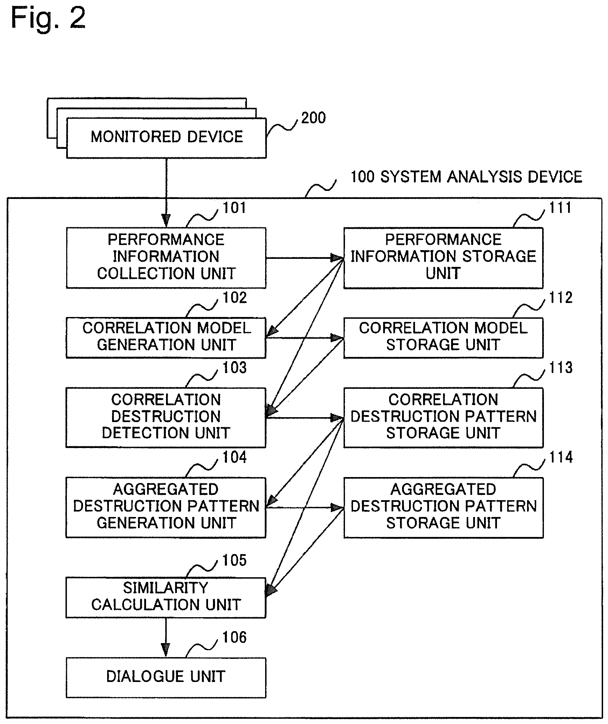

Firstly, a configuration of the exemplary embodiment of the present invention will be described. Fig. 2 is a block diagram illustrating a configuration of a system analysis device 100 in the exemplary embodiment of the present invention.

Referring to Fig. 2, the system analysis device 100 in the exemplary embodiment of the present invention is connected to a monitored system including one or more monitored devices 200. The monitored devices 200 are a server device or a network device that configure the monitored system. Here, the monitored devices 200 that provide the same service, such as server devices or network devices arranged distributedly, belong to the same device group. A device identifier of the monitored device 200 may be given to include an identifier of a device group.

It is to be noted that, in the following description, a code in quotation marks indicates an identifier. For example, a device group "WEB" indicates a device group having an identifier WEB, and a Web server "WEB 1" indicates a Web server having an identifier WEB 1.

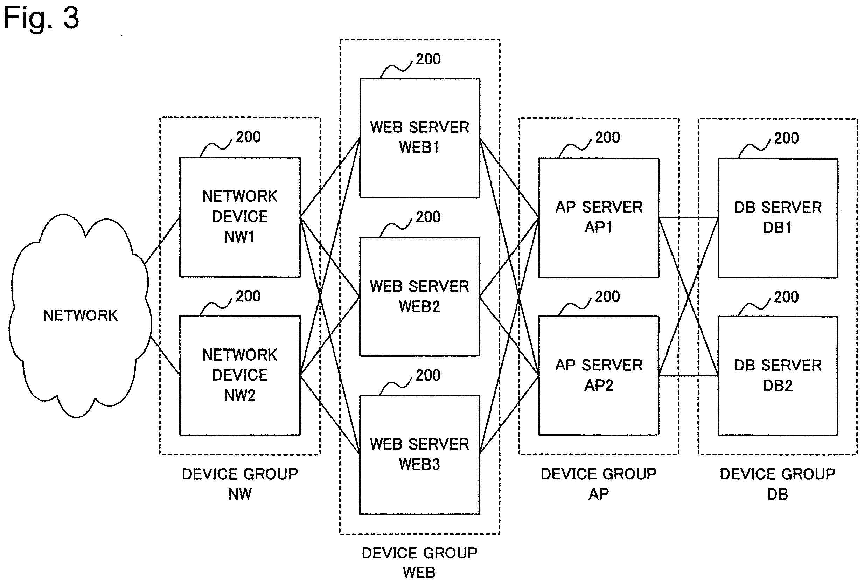

Fig. 3 is a diagram illustrating an example of the monitored system in the exemplary embodiment of the present invention. In the example of Fig. 3, the monitored system includes, as the monitored devices 200, network devices "NW 1" and "NW 2", Web servers "WEB 1", "WEB 2", and "WEB 3", application (AP) servers "AP 1" and "AP 2", and database (DB) servers "DB 1" and "DB 2". Here, the network devices "NW 1" and "NW 2" belong to a device group "NW". The Web servers "WEB 1", "WEB 2", and "WEB 3" belong to a device group "WEB". The application (AP) servers "AP 1" and "AP 2" belong to a device group "AP". The database (DB) servers "DB 1" and "DB 2" belong to a device group "WEB".

The monitored device 200 measures actual measurement data (measurement values) of performance values of a plurality of items of the monitored device 200 at regular intervals, and transmits the actual measurement data to the system analysis device 100. As the items of the performance values, for example, utilization or usage of a computer resource or a network resource, such as CPU (Central Processing Unit) utilization, memory utilization, disk access frequency, and an input/output packet count, are used.

Here, a combination of the monitored device 200 and the item of the performance value is defined as a metric (performance index), and a combination of values of a plurality of metrics measured at the same time is defined as performance information. The metric is represented by a numerical value of an integer number or a decimal number. The metric corresponds to an "element" for which a correlation model is generated in PTL 1.

Hereinafter, an identifier of the metric is indicated by a combination of the device identifier and the item of the performance value. For example, a metric "WEB 1. CPU" indicates CPU utilization of the Web server "WEB 1". In addition, a metric "NW 1. IN" indicates an input packet count of the network device "NW 1".

The system analysis device 100 generates a correlation model 122 of the monitored system on the basis of performance information collected from the monitored devices 200, and analyzes a state of the monitored system using the generated correlation model 122.

The system analysis device 100 includes a performance information collection unit 101, a correlation model generation unit 102, a correlation destruction detection unit 103, an aggregated destruction pattern generation unit 104, a similarity calculation unit 105, and a dialogue unit 106. The system analysis device 100 further includes a performance information storage unit 111, a correlation model storage unit 112, a correlation destruction pattern storage unit 113, and an aggregated destruction pattern storage unit 114.

The performance information collection unit 101 collects the performance information from the monitored devices 200.

The performance information storage unit 111 stores time series variation of the performance information collected by the performance information collection unit 101, as performance series information 121.

The correlation model generation unit 102 generates the correlation model 122 of the monitored system on the basis of the performance series information 121.

Here, the correlation model 122 includes a correlation function (or conversion function) that indicates a correlation of each pair of metrics among a plurality of metrics. The correlation function is a function that uses time series data at and before time t of one metric (input metric) of a pair of metrics and time series data before time t of the other metric (output metric) to estimate a value of the output metric at time t. The correlation model generation unit 102 determines a coefficient of the correlation function for each pair of metrics on the basis of the performance information in a predetermined modeling period. The coefficient of the correlation function is determined by system identification processing for time series of the measurement values of the metrics, as is the case with an operation management device of PTL 1. The correlation model generation unit 102 may calculate weight on the basis of a conversion error of the correlation function for each pair of metrics, and use a set of the correlation functions (effective correlation functions) whose weight is equal to or greater than a predetermined value, as the correlation model 122, as is the case with the operation management device of PTL 1.

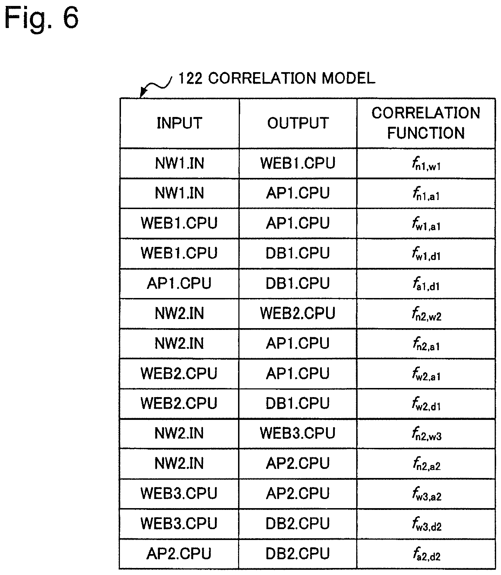

Fig. 6 is a diagram illustrating an example of the correlation model 122 in the exemplary embodiment of the present invention. The correlation model 122 includes the correlation function of each pair of metrics. Hereinafter, the correlation function between the input metric (X) and the output metric (Y) is referred to as f_{x, y}.

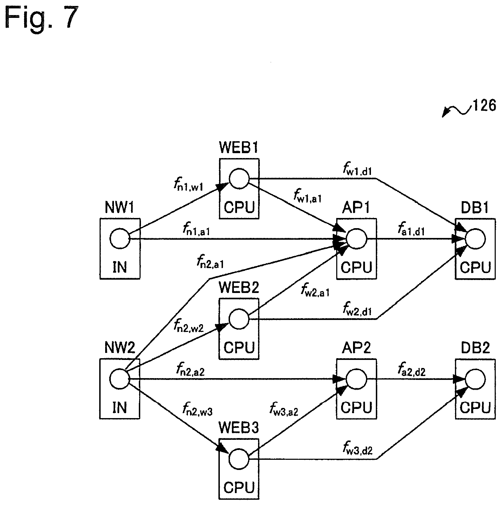

Fig. 7 is a diagram illustrating an example of a correlation map 125 in the exemplary embodiment of the present invention. The correlation map 125 of Fig. 7 corresponds to the correlation model 122 of Fig. 6. In Fig. 7, the correlation model 122 is indicated by a graph composed of nodes (circles) and arrows. Here, each node indicates a metric, and an arrow between metrics indicates a correlation. In addition, the source of the arrow indicates an input metric, and the destination of the arrow indicates an output metric.

Hereinafter, each correlation in the correlation model 122 is indicated by a pair of an identifier of the input metric and an identifier of the output metric. For example, a correlation "NW 1. IN-WEB 1. CPU" indicates a correlation in which the metric "NW 1. IN" is input and the metric "WEB 1. CPU" is output.

The correlation model storage unit 112 stores the correlation model 122 generated by the correlation model generation unit 102.

The correlation destruction detection unit 103 detects correlation destruction of the correlation included in the correlation model 122, with respect to newly-inputted performance information, as is the case with the operation management device of PTL 1.

Here, the correlation destruction detection unit 103 inputs the measurement values of the metrics into the correlation function to obtain a predicted value of the output metric, with respect to each pair of metrics, as is the case with PTL 1. Then, when a difference (conversion error due to correlation function) between the obtained predicted value of the output metric and the measurement value of the output metric is equal to or greater than a predetermined value, the correlation destruction detection unit 103 detects correlation destruction of the correlation of the pair.

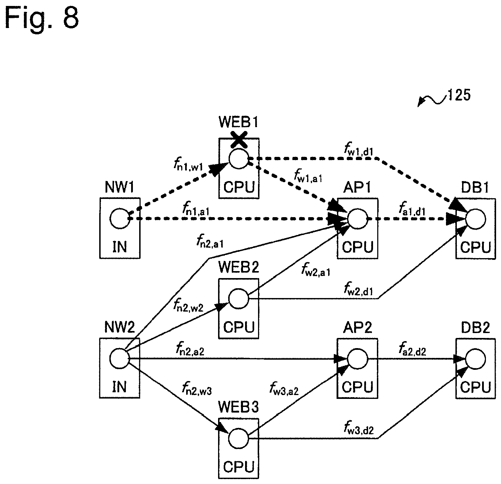

Fig. 8, Fig. 10, and Fig. 13 are diagrams illustrating examples of correlation destruction detection results in the exemplary embodiment of the present invention. In Fig. 8, Fig. 10, and Fig. 13, a correlation in which correlation destruction has been detected on the correlation map 125 of Fig. 7 is indicated by a dotted arrow.

In addition, the correlation destruction detection unit 103 generates correlation destruction patterns 123 each of which is a set of correlations in which correlation destruction has been detected.

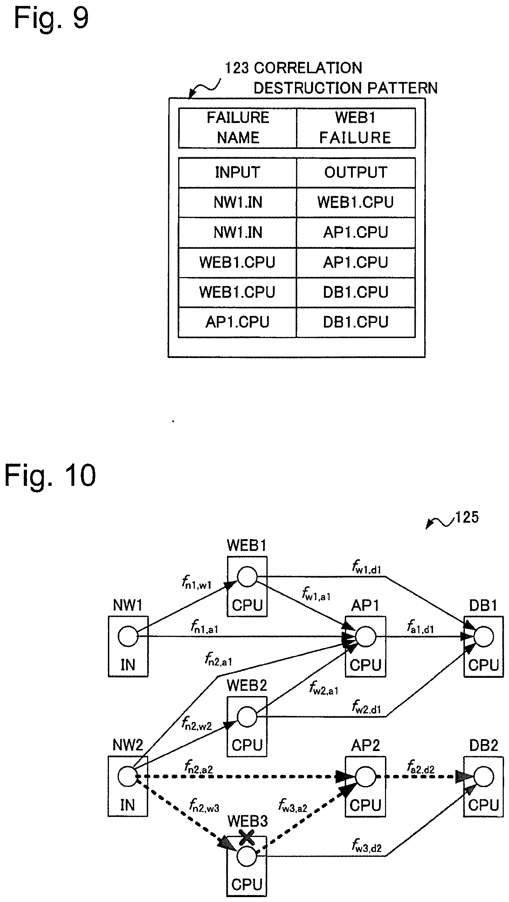

Fig. 9, Fig. 11, and Fig. 14 are diagrams illustrating examples of the correlation destruction patterns 123 in the exemplary embodiment of the present invention. The correlation destruction patterns 123 of Fig. 9, Fig. 11, and Fig. 14 correspond to the correlation destruction detection results of Fig. 8, Fig. 10, and Fig. 13, respectively.

The correlation destruction pattern 123 includes a set of correlations in which correlation destruction has been detected. In addition, the correlation destruction pattern 123 may further include a failure name or an abnormality name that identifies a failure or an abnormality that has occurred when the correlation destruction has been detected. In this case, the failure name or the abnormality name is set by an administrator or the like, with respect to the set of correlations in which correlation destruction has been detected when the failure or the abnormality has occurred, for example.

The correlation destruction pattern storage unit 113 stores the correlation destruction patterns 123 generated by the correlation destruction detection unit 103.

The aggregated destruction pattern generation unit 104 extracts correlation destruction patterns 123 of the same type, from the correlation destruction patterns 123 stored in the correlation destruction pattern storage unit 113, and generates an aggregated destruction pattern 124 which is obtained by aggregating the correlation destruction patterns 123 of the same type.

The aggregated destruction pattern storage unit 114 stores the aggregated destruction pattern 124 generated by the aggregated destruction pattern generation unit 104.

The similarity calculation unit 105 calculates a similarity between a newly-detected correlation destruction pattern 123 and the aggregated destruction pattern 124.

The dialogue unit 106 provides the calculation result of the similarity by the similarity calculation unit 105 for the administrator or the like.

The system analysis device 100 is a computer that includes a CPU and a storage medium storing a program and operates by control based on the program. In addition, the performance information storage unit 111, the correlation model storage unit 112, the correlation destruction pattern storage unit 113, and the aggregated destruction pattern storage unit 114 may be separate storage mediums or may be configured by one storage medium.

Next, an operation of the system analysis device 100 in the exemplary embodiment of the present invention will be described.

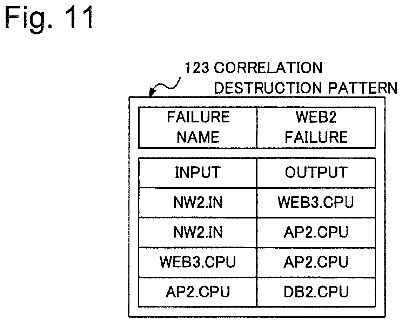

Here, it is assumed that the correlation model 122 illustrated in Fig. 6 is generated by the correlation model generation unit 102 on the basis of the performance information in a predetermined modeling period and stored in the correlation model storage unit 112. In addition, it is assumed that correlation destruction patterns 123a, 123b of Fig. 9, Fig. 11 are generated with respect to correlation destruction of Fig. 8, Fig. 10 detected at the time of failures of the Web servers "WEB 1", "WEB 2", and stored in the correlation destruction pattern storage unit 113.

Firstly, aggregated destruction pattern generation processing in the exemplary embodiment of the present invention will be described.

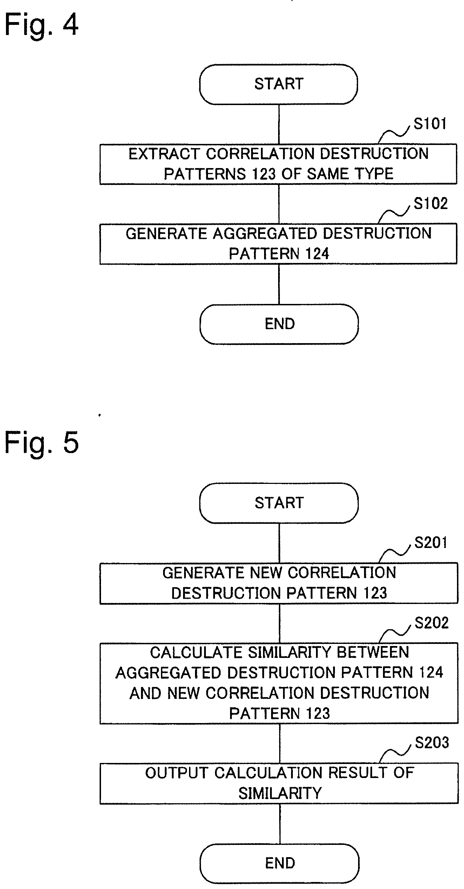

Fig. 4 is a flow chart illustrating the aggregated destruction pattern generation processing in the exemplary embodiment of the present invention.

The aggregated destruction pattern generation unit 104 extracts correlation destruction patterns 123 of the same type, from the correlation destruction patterns 123 stored in the correlation destruction pattern storage unit 113 (Step S101).

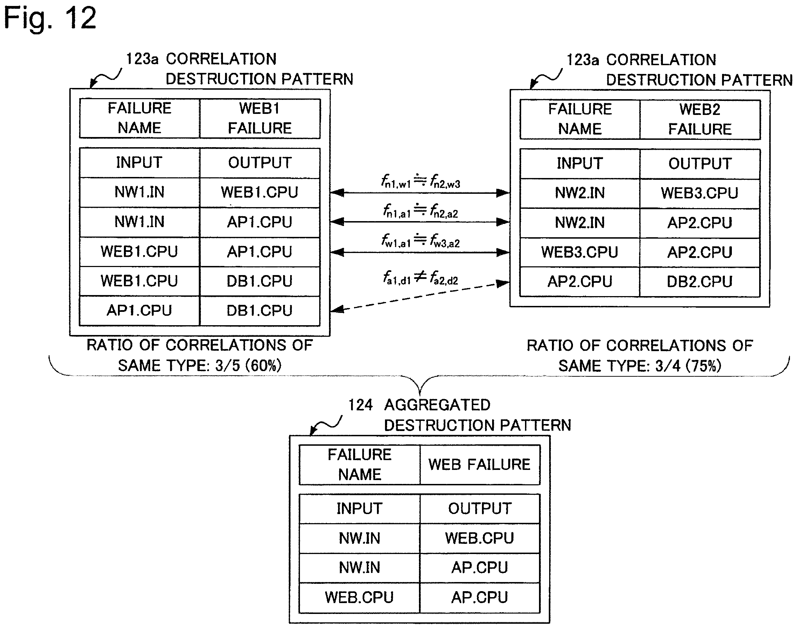

Fig. 12 is a diagram illustrating a generation example of an aggregated destruction pattern 124 in the exemplary embodiment of the present invention.

Here, the aggregated destruction pattern generation unit 104 determines that, between correlation destruction patterns 123, correlations having the same pairs of metric types and a difference of correlation coefficients within a predetermined range are correlations of the same type. Here, having the same pairs of metric types means that, between the correlations, the input metric types and the output metric types are the same, respectively. Then, the aggregated destruction pattern generation unit 104 extracts correlation destruction patterns 123 including, for example, a predetermined number or more, or a predetermined ratio or more of the correlations of the same type, as the correlation destruction patterns 123 of the same type.

The metric type is determined such that metrics that behave in the same way on the monitored system are metrics of the same type. For example, metrics having the same items of the performance values in the different monitored devices 200 that provide the same service (belong to the same device group) are metrics of the same type.

The metric type is determined on the basis of the device group and the item of the performance value included in the identifier of the metric, for example. In addition, when the identifier of the metric includes the metric type, the metric type may be obtained from the identifier of the metric. In addition, when information in which the identifier of the metric and the metric type are associated is stored in a storage unit that is not illustrated in the drawings, the metric type may be determined on the basis of the information.

Hereinafter, the metric type is indicated by a combination of the device group to which the monitored device 200 belongs and the item of the performance value. For example, a metric type "WEB. CPU" indicates a metric according to the CPU utilization of the monitored device 200 that belongs to the device group "WEB". In addition, a metric type "NW. IN" indicates a metric according to the input packet count of the monitored device 200 that belongs to the device group "NW". In addition, the pair of metric types is indicated by a combination of the input metric type and the output metric type. For example, a pair of metric types "NW. IN-WEB. CPU" indicates that the input metric type is "NW. IN" and the output metric type is "WEB. CPU".

For example, in Fig. 12, pairs of metric types of a correlation "NW 1. IN-WEB 1. CPU" included in the correlation destruction pattern 123a and a correlation "NW 2. IN-WEB 3. CPU" included in the correlation destruction pattern 123b are the same "NW. IN-WEB. CPU". Here, it is assumed that a difference between correlation coefficients of a correlation function f_{n1, w1} of the correlation "NW 1. IN-WEB 1. CPU" and a correlation function f_{n2, w3} of the correlation "NW 2. IN-WEB 3. CPU" is within a predetermined range. In this case, the aggregated destruction pattern generation unit 104 determines that these correlations are the same type.

Similarly, it is assumed that a difference between correlation coefficients of a correlation function f_{w1, a1} of a correlation "NW 1. IN-AP 1. CPU" and a correlation function f_{w2, a2} of a correlation "NW 2. IN-AP 2. CPU" whose pairs of metric types are "NW. IN-AP. CPU" is within a predetermined range. In this case, the aggregated destruction pattern generation unit 104 determines that these correlations are also the same type. Furthermore, it is assumed that a difference between correlation coefficients of a correlation function f_{w1, a1} of a correlation "WEB 1. CPU-AP 1. CPU" and a correlation function f_{w3, a2} of a correlation "WEB 3. CPU-AP 2. CPU" whose pairs of metric types are "WEB. CPU-AP. CPU" is within a predetermined range. In this case, the aggregated destruction pattern generation unit 104 determines that these correlations are also the same type.

On the other hand, it is assumed that a difference between correlation coefficients of a correlation function f_{a1, d1} of a correlation "AP 1. CPU-DB 1. CPU" and a correlation function f_{a2, d2} of a correlation "AP 2. CPU-DB 2. CPU" whose pairs of metric types are "AP. CPU-DB. CPU" exceeds a predetermined range. In this case, the aggregated destruction pattern generation unit 104 determines that these correlations are not the same type.

Then, for example, it is assumed that, when the ratio of the correlations of the same type is equal to or greater than 60%, it is determined that the correlation destruction patterns 123 are the same type. In this case, the aggregated destruction pattern generation unit 104 extracts the correlation destruction pattern 123a and the correlation destruction pattern 123b, as the correlation destruction patterns 123 of the same type.

It is to be noted that the aggregated destruction pattern generation unit 104 may determine that correlations having the same pairs of metric types are correlations of the same type, without using the correlation coefficients.

Next, the aggregated destruction pattern generation unit 104 generates aggregated destruction pattern 124 on the basis of the correlation destruction patterns 123 of the same type (Step S102).

Here, the aggregated destruction pattern 124 includes a set of aggregated correlations in which the correlations of the same type are aggregated. The pairs of metric types according to the correlations of the same type are used for the aggregated correlations.

Hereinafter, each aggregated correlation is indicated by a pair of the input metric type and the output metric type. For example, an aggregated correlation "NW. IN-WEB. CPU" indicates an aggregated correlation in which the input metric type is "NW. IN" and the output metric type is "WEB. CPU".

For example, in Fig. 12, the aggregated destruction pattern generation unit 104 sets the pairs of metric types according to the correlations of the same type, "NW. IN-WEB. CPU", "NW. IN-AP. CPU", and "WEB. CPU-AP. CPU" as the aggregated correlations, in the aggregated destruction pattern 124.

In addition, the aggregated destruction pattern generation unit 104 may set a failure name or an abnormality name that is common to the failure name or the abnormality name of the correlation destruction patterns 123 of the same type, in the aggregated destruction pattern 124. In this case, the common failure name or abnormality name may be set by the administrator or the like, with respect to the correlation destruction patterns 123 of the same type, for example.

For example, in Fig. 12, the aggregated destruction pattern generation unit 104 sets a failure name "WEB failure", in the aggregated destruction pattern 124.

Next, abnormality level calculation processing in the exemplary embodiment of the present invention will be described.

Fig. 5 is a flow chart illustrating the abnormality level calculation processing in the exemplary embodiment of the present invention.

The correlation destruction detection unit 103 detects correlation destruction of the correlation included in the correlation model 122 using performance information newly-collected by the performance information collection unit 101, and generates a new correlation destruction pattern 123 (Step S201).

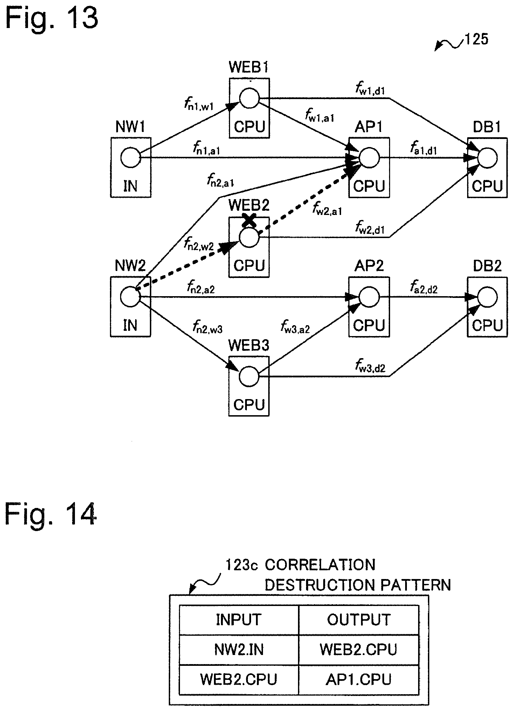

For example, the correlation destruction detection unit 103 detects correlation destruction of Fig. 13 with respect to the newly-collected performance information, and generates a correlation destruction pattern 123c of Fig. 14.

Next, the similarity calculation unit 105 calculates the similarity between the aggregated destruction pattern 124 and the new correlation destruction pattern 123 (Step S202).

Here, when aggregated correlations included in the aggregated destruction pattern 124 and correlations included in the new correlation destruction pattern 123 have the same pairs of metric types, the similarity calculation unit 105 determines that the aggregated correlations and the correlations are the same type. Here, having the same pairs of metric types means that, between the aggregated correlation and the correlation, the input metric types and the output metric types are the same, respectively. Then, for example, the similarity calculation unit 105 calculates the number or the ratio of the aggregated correlations among the aggregated correlations included in the aggregated destruction pattern 124, which are the same type as the correlations included in the new correlation destruction pattern 123, as the similarity.

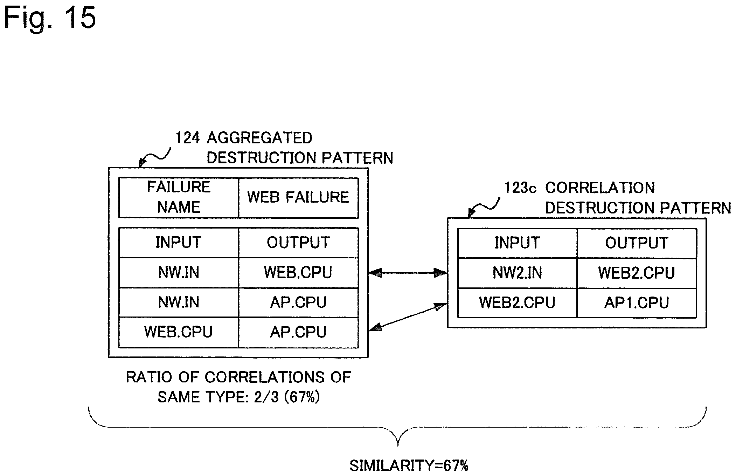

Fig. 15 is a diagram illustrating a calculation example of the similarity in the exemplary embodiment of the present invention.

For example, in Fig. 15, a pair of metric types of a correlation "NW 2. IN-WEB 2. CPU" included in the correlation destruction pattern 123c is the same as the aggregated correlation "NW. IN-WEB. CPU" included in the aggregated destruction pattern 124. Therefore, the similarity calculation unit 105 determines that the aggregated correlation "NW. IN-WEB. CPU" and a correlation "NW 2. IN-WEB 3. CPU" are the same type. Similarly, the similarity calculation unit 105 determines that the aggregated correlation "WEB. CPU-AP. CPU" and a correlation "WEB 2. CPU-AP 1. CPU" are the same type.

Then, the similarity calculation unit 105 calculates 67% that is the ratio of the aggregated correlations of the same type, as the similarity.

Next, the similarity calculation unit 105 outputs the calculation result of the similarity to the administrator or the like, through the dialogue unit 106 (Step S203). Here, the similarity calculation unit 105 may output the similarity together with the failure name or the abnormality name included in the aggregated destruction pattern 124. In addition, the similarity calculation unit 105 may output a list of the similarities with respect to a respective plurality of the aggregated destruction patterns 124 in order of the similarities.

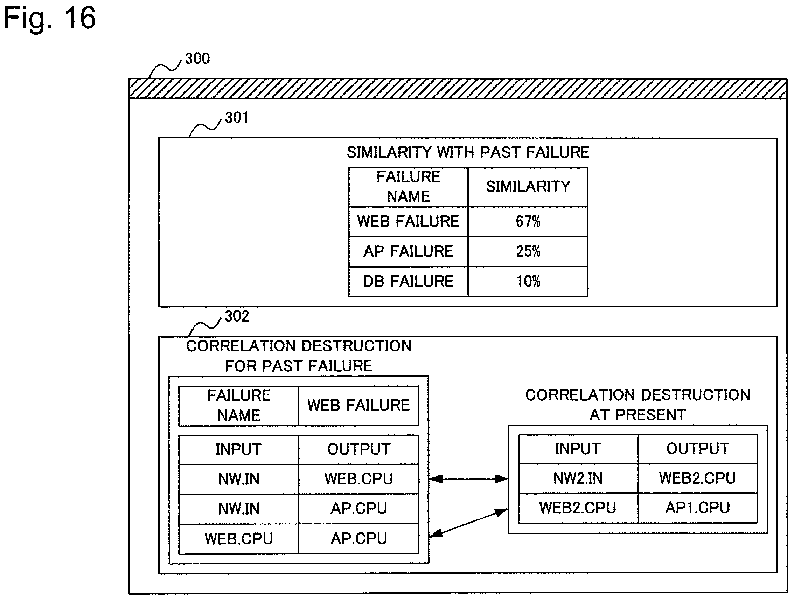

Fig. 16 is a diagram illustrating an example of a display screen 300 in the exemplary embodiment of the present invention. The display screen 300 includes a similarity list display unit 301 and a correlation destruction pattern comparison screen 302.

In the example of Fig. 16, in the similarity list display unit 301, combinations of a failure name and a similarity are displayed as a list in decreasing order of the similarity. In addition, in the correlation destruction pattern comparison screen 302, with respect to the selected failure, a comparison result between the aggregated destruction pattern 124 (correlation destruction at the time of a failure in the past) and the correlation destruction pattern 123 (correlation destruction at present) is displayed.

The administrator or the like refers to the display screen 300, and can determine that a failure or an abnormality having a large similarity may occur in a monitored system.

For example, the administrator or the like can determine that a failure of the WEB server ("WEB 2") having a large similarity may occur on the basis of the display screen 300 of Fig. 16.

Accordingly, the operation of the exemplary embodiment of the present invention is completed.

It is to be noted that, in the exemplary embodiment of the present invention, the aggregated destruction pattern generation unit 104 extracts the correlations in which the input metric types and the output metric types are the same, respectively, as the correlations of the same type. However, the aggregated destruction pattern generation unit 104 may extract the correlations in which the input metric type and the output metric type of one side are the same as the output metric type and the input metric type of the other side, respectively, as the correlations of the same type. Similarly, the similarity calculation unit 105 determines that the aggregated correlation and the correlation, in which the input metric types and the output metric types are the same, respectively, are the same type. However, the similarity calculation unit 105 may determine that the aggregated correlation and the correlation, in which the input metric type and the output metric type of one side are the same as the output metric type and the input metric type of the other side, respectively, are the same type.

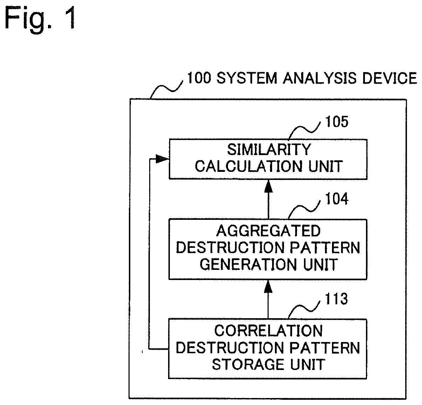

Next, a characteristic configuration of the exemplary embodiment of the present invention will be described. Fig. 1 is a block diagram illustrating the characteristic configuration of the exemplary embodiment of the present invention.

Referring to Fig. 1, the system analysis device 100 includes the correlation destruction pattern storage unit 113, the aggregated destruction pattern generation unit 104, and the similarity calculation unit 105.

The correlation destruction pattern storage unit 113 stores a plurality of correlation destruction patterns 123 each of which is a set of correlations in which correlation destruction has been detected among correlations of pairs of metrics in a system. The aggregated destruction pattern generation unit 104 generates an aggregated destruction pattern 124 which is obtained by aggregating correlation destruction patterns 123 of the same type among the plurality of correlation destruction patterns 123. The similarity calculation unit 105 calculates and outputs a similarity between the aggregated destruction pattern 124 and a newly-detected correlation destruction pattern 123.

According to the exemplary embodiment of the present invention, in state detection of a system using a correlation destruction pattern, the versatility of the correlation destruction pattern can be improved. The reason is as follows. The aggregated destruction pattern generation unit 104 generates the aggregated destruction pattern 124 which is obtained by aggregating the correlation destruction patterns 123 of the same type among the plurality of correlation destruction patterns 123. Then, the similarity calculation unit 105 calculates the similarity between the aggregated destruction pattern 124 and the newly-detected correlation destruction pattern 123.

Accordingly, even if there is a change in a correlation model, for example, a device of the same type performing distributed processing is added, by using the aggregated destruction pattern 124 generated on the basis of the correlation destruction pattern 123 at the time of a failure or abnormality in the past, a cause of the failure or the abnormality can be determined. In addition, even if a device in which a failure or abnormality occurred in the past and a device in which a failure or abnormality has occurred at present are devices of the same type performing distributed processing, but different devices, a cause of the failure or the abnormality can be determined using the aggregated destruction pattern 124.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

For example, in the above-described exemplary embodiment, the monitored system is an IT system including a server device, a network device, and the like as the monitored devices 200. However, the monitored system may be another system as long as a correlation model of the monitored system is generated and an abnormality cause can be determined on the basis of correlation destruction. For example, the monitored system may be a plant system such as factory equipment or a power plant, a structure such as a bridge or a tunnel, or transportation equipment such as a vehicle or an aircraft. In this case, the system analysis device 100 generates the correlation model 122 using various sensor values such as a temperature, a vibration, a position, a current, a voltage, a speed, and an angle, as metrics. Then, the system analysis device 100 generates the aggregated destruction pattern 124 and calculates the similarity using sensors that are the same type and behave in the same way (arranged at the same position, for example) as metrics of the same type.

This application is based upon and claims the benefit of priority from Japanese Patent Application No. 2013-028746, filed on February 18, 2013.

### [Industrial Applicability]

The present invention can be applied to a system analysis such as an IT system, a plant system, a physical system, or a social system, which determines a cause of an abnormality or a failure on the basis of correlation destruction detected on a correlation model.

### [Reference signs List]

- 100: SYSTEM ANALYSIS DEVICE
- 101: PERFORMANCE INFORMATION COLLECTION UNIT
- 102: CORRELATION MODEL GENERATION UNIT
- 103: CORRELATION DESTRUCTION DETECTION UNIT
- 104: AGGREGATED DESTRUCTION PATTERN GENERATION UNIT
- 105: SIMILARITY CALCULATION UNIT
- 106: DIALOGUE UNIT
- 111: PERFORMANCE INFORMATION STORAGE UNIT
- 112: CORRELATION MODEL STORAGE UNIT
- 113: CORRELATION DESTRUCTION PATTERN STORAGE UNIT
- 114: AGGREGATED DESTRUCTION PATTERN STORAGE UNIT
- 121: PERFORMANCE SERIES INFORMATION
- 122: CORRELATION MODEL
- 123: CORRELATION DESTRUCTION PATTERN
- 124: AGGREGATED DESTRUCTION PATTERN
- 125: CORRELATION MAP
- 200: MONITORED DEVICE
- 300: DISPLAY SCREEN
- 301: SIMILARITY LIST DISPLAY UNIT
- 302: CORRELATION DESTRUCTION PATTERN COMPARISON SCREEN

## Claims

1. A system analysis device comprising:
a correlation destruction pattern storage means (113) adapted to store a plurality of correlation destruction patterns each of which is a set of correlations in which correlation destruction has been detected, when a failure has occurred in the past, among correlations of pairs of metrics in a system including one or more monitored devices each belonging to any one of one or more device groups, a metric being a combination of a monitored device and an item of a performance value, a measured value of the metric being collected from the monitored device, a correlation function being a function that uses measured values at and before time t of a first metric of a pair of the first metric and a second metric and a measured value before time t of the second metric to predict a value of the second metric at time t, the correlation destruction being detected if a difference between a value of the second metric predicted by inputting measured values of the pair of the first metric and the second metric into the correlation function and a measured value of the second metric is equal to or larger than a predetermined value;
an aggregated destruction pattern generation means (104) adapted to generate an aggregated destruction pattern which is obtained by aggregating correlation destruction patterns of the same type among the plurality of correlation destruction patterns, the correlation destruction patterns of the same type being correlation destruction patterns including a predetermined number or more, or a predetermined ratio or more of correlations of the same type, the correlations of the same type being correlations having the same pair of metric types, a metric type for a metric being a combination of a device group to which a monitored device including the metric belongs and an item of performance value for the metric, the aggregated destruction pattern being a set of aggregated correlations obtained by aggregating correlations of the same type among the correlation destruction patterns of the same type, the aggregated correlations being pairs of metric types with respect to the correlations of the same type; and
a similarity calculation means (105) adapted to calculate and to output a similarity between the aggregated destruction pattern and a correlation destruction pattern detected at present.

2. The system analysis device according to claim 1, wherein
the similarity calculation means (105) is adapted to calculate a number or a ratio of aggregated correlations among the aggregated correlations included in the aggregated destruction pattern, which are the same type as correlations included in the correlation destruction pattern detected at present, as the similarity.

3. The system analysis device according to claim 2, wherein
when the pairs of metric types of the aggregated correlations and pairs of metric types according to the correlations included in the correlation destruction pattern detected at present are the same, the similarity calculation means (105) is adapted to determine that the aggregated correlations and the correlations included in the correlation destruction pattern detected at present are of the same type.

4. The system analysis device according to claim 3, wherein
the aggregated destruction pattern generation means (104) is adapted to determine that correlations having the same pairs of metric types and a difference of correlation coefficients within a predetermined range are the correlations of the same type.

5. A system analysis method comprising:
storing a plurality of correlation destruction patterns each of which is a set of correlations in which correlation destruction has been detected, when a failure has occurred in the past, among correlations of pairs of metrics in a system including one or more monitored devices each belonging to any one of one or more device groups, a metric being a combination of a monitored device and an item of a performance value, a measured value of the metric being collected from the monitored device, a correlation function being a function that uses measured values at and before time t of a first metric of a pair of the first metric and a second metric and a measured value before time t of the second metric to predict a value of the second metric at time t, the correlation destruction being detected if a difference between a value of the second metric predicted by inputting measured values of the pair of the first metric and the second metric into the correlation function and a measured value of the second metric is equal to or larger than a predetermined value;
generating an aggregated destruction pattern which is obtained by aggregating correlation destruction patterns of the same type among the plurality of correlation destruction patterns, the correlation destruction patterns of the same type being correlation destruction patterns including a predetermined number or more, or a predetermined ratio or more of correlations of the same type, the correlations of the same type being correlations having the same pair of metric types, a metric type for a metric being a combination of a device group to which a monitored device including the metric belongs and an item of performance value for the metric, the aggregated destruction pattern being a set of aggregated correlations obtained by aggregating correlations of the same type among the correlation destruction patterns of the same type, the aggregated correlations being pairs of metric types with respect to the correlations of the same type; and
calculating and outputting a similarity between the aggregated destruction pattern and a correlation destruction pattern detected at present.

6. The system analysis method according to claim 5, wherein
when calculating the similarity, calculating a number or a ratio of aggregated correlations among the aggregated correlations included in the aggregated destruction pattern, which are the same type as correlations included in the correlation destruction pattern detected at present, as the similarity.

7. The system analysis method according to claim 6, wherein
when calculating the similarity, in a case that the pairs of metric types of the aggregated correlations and pairs of metric types according to the correlations included in the correlation destruction pattern detected at present are the same, determining that the aggregated correlations and the correlations included in the correlation destruction pattern detected at present are of the same type.

8. The system analysis method according to claim 7, wherein
when generating the aggregated destruction pattern, determining that correlations having the same pairs of metric types and a difference of correlation coefficients within a predetermined range are the correlations of the same type.

9. A computer readable storage medium recording thereon a program causing a computer to execute the method according to any one of claims 5 to 8 when said program is executed on said computer.

## Patentansprüche

1. Systemanalysevorrichtung mit:
einer Korrelationszerstörungsmuster-Speichereinrichtung (113), die dazu eingerichtet ist, eine Vielzahl von Korrelationszerstörungsmustern zu speichern, von denen jedes ein Satz von Korrelationen, in denen eine Korrelationszerstörung erfasst worden ist, wenn in der Vergangenheit ein Fehler aufgetreten ist, unter Korrelationen von Paaren von Metriken in einem System ist, das eine oder mehrere überwachte Vorrichtungen enthält, die jeweils einer beliebigen unter einer oder mehreren Vorrichtungsgruppen zugehörig sind, wobei eine Metrik eine Kombination aus einer überwachten Vorrichtung und einem Element eines Leistungswerts ist, wobei ein Messwert der Metrik von der überwachten Vorrichtung gesammelt wird, eine Korrelationsfunktion eine Funktion ist, die Messwerte zum und vor einem Zeitpunkt t einer ersten Metrik eines Paares aus der ersten Metrik und einer zweiten Metrik und einem Messwert vor dem Zeitpunkt t der zweiten Metrik verwendet, um einen Wert der zweiten Metrik zum Zeitpunkt t vorherzusagen, wobei die Korrelationszerstörung erfasst wird, wenn eine Differenz zwischen einem Wert der zweiten Metrik, der durch Eingabe von Messwerten des Paares aus der ersten Metrik und der zweiten Metrik in die Korrelationsfunktion vorhergesagt wird, und einem Messwert der zweiten Metrik größer oder gleich einem vorgegebenen Wert ist;
einer Einrichtung (104) zum Erzeugen eines aggregierten Zerstörungsmusters, die dazu eingerichtet ist, ein aggregiertes Zerstörungsmuster zu erzeugen, das durch Aggregieren von Korrelationszerstörungsmustern des gleichen Typs unter der Vielzahl von Korrelationszerstörungsmustern erhalten wird, wobei die Korrelationszerstörungsmuster des gleichen Typs Korrelationszerstörungsmuster sind, die eine vorgegebene Anzahl oder mehr oder ein vorgegebenes Verhältnis oder mehr von Korrelationen des gleichen Typs enthalten, wobei die Korrelationen des gleichen Typs Korrelationen sind, die das gleiche Paar von Metriktypen aufweisen, wobei ein Metriktyp für eine Metrik eine Kombination aus einer Vorrichtungsgruppe, der eine überwachte Vorrichtung, die die Metrik enthält, zugehörig ist, und einem Element eines Leistungswerts für die Metrik ist, wobei das aggregierte Zerstörungsmuster ein Satz von aggregierten Korrelationen ist, die durch Aggregieren von Korrelationen des gleichen Typs unter den Korrelationszerstörungsmustern des gleichen Typs erhalten werden, wobei die aggregierten Korrelationen Paare von Metriktypen in Bezug auf die Korrelationen des gleichen Typs sind; und
einer Ähnlichkeitsberechnungseinrichtung (105), die dazu eingerichtet ist, eine Ähnlichkeit zwischen dem aggregierten Zerstörungsmuster und einem aktuell erfassten Korrelationszerstörungsmuster zu berechnen und auszugeben.

2. Systemanalysevorrichtung nach Anspruch 1, wobei
die Ähnlichkeitsberechnungseinrichtung (105) dazu eingerichtet ist, eine Anzahl oder ein Verhältnis von aggregierten Korrelationen unter den aggregierten Korrelationen, die in dem aggregierten Zerstörungsmuster enthalten sind, die vom gleichen Typ sind wie Korrelationen, die in dem aktuell erfassten Korrelationszerstörungsmuster enthalten sind, als die Ähnlichkeit zu berechnen.

3. Systemanalysevorrichtung nach Anspruch 2, wobei,
wenn die Paare von Metriktypen der aggregierten Korrelationen und Paare von Metriktypen gemäß den Korrelationen, die in dem aktuell erfassten Korrelationszerstörungsmuster enthalten sind, gleich sind, die Ähnlichkeitsberechnungseinrichtung (105) dazu eingerichtet ist, zu bestimmen, dass die aggregierten Korrelationen und die Korrelationen, die in dem aktuell erfassten Korrelationszerstörungsmuster enthalten sind, vom gleichen Typ sind.

4. Systemanalysevorrichtung nach Anspruch 3, wobei
die Einrichtung (104) zum Erzeugen eines aggregierten Zerstörungsmusters dazu eingerichtet ist, zu bestimmen, dass Korrelationen, die die gleichen Paare von Metriktypen und eine Differenz von Korrelationskoeffizienten innerhalb eines vorgegebenen Bereichs aufweisen, die Korrelationen des gleichen Typs sind.

5. Systemanalyseverfahren mit den Schritten:
Speichern einer Vielzahl von Korrelationszerstörungsmustern, von denen jedes ein Satz von Korrelationen, in denen eine Korrelationszerstörung erfasst worden ist, wenn in der Vergangenheit ein Fehler aufgetreten ist, unter Korrelationen von Paaren von Metriken in einem System ist, das eine oder mehrere überwachte Vorrichtungen enthält, die jeweils einer beliebigen unter einer oder mehreren Vorrichtungsgruppen zugehörig sind, wobei eine Metrik eine Kombination aus einer überwachten Vorrichtung und einem Element eines Leistungswerts ist, wobei ein Messwert der Metrik von der überwachten Vorrichtung gesammelt wird, eine Korrelationsfunktion eine Funktion ist, die Messwerte zum und vor dem Zeitpunkt t einer ersten Metrik eines Paares aus der ersten Metrik und einer zweiten Metrik und einem Messwert vor dem Zeitpunkt t der zweiten Metrik verwendet, um einen Wert der zweiten Metrik zum Zeitpunkt t vorherzusagen, wobei die Korrelationszerstörung erfasst wird, wenn eine Differenz zwischen einem Wert der zweiten Metrik, der durch Eingabe von Messwerten des Paares aus der ersten Metrik und der zweiten Metrik in die Korrelationsfunktion vorhergesagt wird, und einem Messwert der zweiten Metrik größer oder gleich einem vorgegebenen Wert ist;
Erzeugen eines aggregierten Zerstörungsmusters, das durch Aggregieren von Korrelationszerstörungsmustern des gleichen Typs unter der Vielzahl von Korrelationszerstörungsmustern erhalten wird, wobei die Korrelationszerstörungsmuster des gleichen Typs Korrelationszerstörungsmuster sind, die eine vorgegebene Anzahl oder mehr oder ein vorgegebenes Verhältnis oder mehr von Korrelationen des gleichen Typs enthalten, wobei die Korrelationen des gleichen Typs Korrelationen mit dem gleichen Paar von Metriktypen sind, ein Metriktyp für eine Metrik eine Kombination aus einer Vorrichtungsgruppe, der eine überwachte Vorrichtung, die die Metrik enthält, zugehörig ist, und einem Element eines Leistungswerts für die Metrik ist, wobei das aggregierte Zerstörungsmuster ein Satz von aggregierten Korrelationen ist, die durch Aggregieren von Korrelationen des gleichen Typs unter den Korrelationszerstörungsmustern des gleichen Typs erhalten werden, wobei die aggregierten Korrelationen Paare von Metriktypen in Bezug auf die Korrelationen des gleichen Typs sind; und
Berechnen und Ausgeben einer Ähnlichkeit zwischen dem aggregierten Zerstörungsmuster und einem aktuell erfassten Korrelationszerstörungsmuster.

6. Systemanalyseverfahren nach Anspruch 5, wobei
beim Berechnen der Ähnlichkeit eine Anzahl oder ein Verhältnis von aggregierten Korrelationen unter den aggregierten Korrelationen, die in dem aggregierten Zerstörungsmuster enthalten sind, die vom gleichen Typ sind wie Korrelationen, die in dem aktuell erfassten Korrelationszerstörungsmuster enthalten sind, als die Ähnlichkeit berechnet wird.

7. Systemanalyseverfahren nach Anspruch 6, wobei
beim Berechnen der Ähnlichkeit in einem Fall, in dem die Paare von Metriktypen der aggregierten Korrelationen und Paare von Metriktypen gemäß den Korrelationen, die in dem aktuell erfassten Korrelationszerstörungsmuster enthalten sind, gleich sind, bestimmt wird, dass die aggregierten Korrelationen und die Korrelationen, die in dem aktuell erfassten Korrelationszerstörungsmuster enthalten sind, vom gleichen Typ sind.

8. Systemanalyseverfahren nach Anspruch 7, wobei
beim Erzeugen des aggregierten Zerstörungsmusters bestimmt wird, dass Korrelationen, die die gleichen Paare von Metriktypen und eine Differenz von Korrelationskoeffizienten innerhalb eines vorgegebenen Bereichs aufweisen, die Korrelationen des gleichen Typs sind.

9. Computerlesbares Speichermedium, auf dem ein Programm gespeichert ist, das einen Computer veranlasst, das Verfahren nach einem der Ansprüche 5 bis 8 auszuführen, wenn das Programm auf dem Computer ausgeführt wird.

## Revendications

1. Dispositif d'analyse de système comprenant :
des moyens de stockage de modèles de destruction de corrélation (113) adaptés pour stocker une pluralité de modèles de destruction de corrélation dont chacun est un ensemble de corrélations dans lesquelles une destruction de corrélation a été détectée, lorsqu'une défaillance s'est produite dans le passé, parmi des corrélations de paires de métriques dans un système comprenant un ou plusieurs dispositifs surveillés appartenant chacun à l'un quelconque d'un ou plusieurs groupes de dispositifs, une métrique étant une combinaison d'un dispositif surveillé et d'un élément d'une valeur de performance, une valeur mesurée de la métrique étant collectée à partir du dispositif surveillé, une fonction de corrélation étant une fonction qui utilise des valeurs mesurées à un instant t et avant celui-ci, d'une première métrique d'une paire de la première métrique et d'une deuxième métrique et une valeur mesurée avant l'instant t de la deuxième métrique pour prédire une valeur de la deuxième métrique à l'instant t, la destruction de corrélation étant détectée si une différence entre une valeur de la deuxième métrique prédite en entrant des valeurs mesurées de la paire de la première métrique et de la deuxième métrique dans la fonction de corrélation et une valeur mesurée de la deuxième métrique est égale ou supérieure à une valeur prédéterminée ;
des moyens de génération de modèle de destruction agrégé (104) adaptés pour générer un modèle de destruction agrégé qui est obtenu en agrégeant des modèles de destruction de corrélation du même type parmi la pluralité de modèles de destruction de corrélation, les modèles de destruction de corrélation du même type étant des modèles de destruction de corrélation comprenant un nombre prédéterminé ou plus, ou un rapport prédéterminé ou plus de corrélations du même type, les corrélations du même type étant des corrélations ayant la même paire de types de métrique, un type de métrique pour une métrique étant une combinaison d'un groupe de dispositifs auquel appartient un dispositif surveillé comprenant la métrique et d'un élément de valeur de performance pour la métrique, le modèle de destruction agrégé étant un ensemble de corrélations agrégées obtenues en agrégeant des corrélations du même type parmi les modèles de destruction de corrélation du même type, les corrélations agrégées étant des paires de types de métrique par rapport aux corrélations du même type ; et
des moyens de calcul de similarité (105) adaptés pour calculer et pour délivrer en sortie une similarité entre le modèle de destruction agrégé et un modèle de destruction de corrélation détecté actuellement.

2. Dispositif d'analyse de système selon la revendication 1, dans lequel
les moyens de calcul de similarité (105) sont adaptés pour calculer un nombre ou un rapport de corrélations agrégées parmi les corrélations agrégées comprises dans le modèle de destruction agrégé, qui sont du même type que des corrélations comprises dans le modèle de destruction de corrélation détecté actuellement, en tant que similarité.

3. Dispositif d'analyse de système selon la revendication 2, dans lequel
lorsque les paires de types de métrique des corrélations agrégées et paires de types de métrique selon les corrélations comprises dans le modèle de destruction de corrélation détecté actuellement sont les mêmes, les moyens de calcul de similarité (105) sont adaptés pour déterminer que les corrélations agrégées et les corrélations comprises dans le modèle de destruction de corrélation détecté actuellement sont du même type.

4. Dispositif d'analyse de système selon la revendication 3, dans lequel
les moyens de génération de modèle de destruction agrégé (104) sont adaptés pour déterminer que des corrélations ayant les mêmes paires de types de métrique et une différence de coefficients de corrélation dans une plage prédéterminée sont les corrélations du même type.

5. Procédé d'analyse de système comprenant :
le stockage d'une pluralité de modèles de destruction de corrélation dont chacun est un ensemble de corrélations dans lesquelles une destruction de corrélation a été détectée, lorsqu'une défaillance s'est produite dans le passé, parmi des corrélations de paires de métriques dans un système comprenant un ou plusieurs dispositifs surveillés appartenant chacun à l'un quelconque d'un ou plusieurs groupes de dispositifs, une métrique étant une combinaison d'un dispositif surveillé et d'un élément d'une valeur de performance, une valeur mesurée de la métrique étant collectée à partir du dispositif surveillé, une fonction de corrélation étant une fonction qui utilise des valeurs mesurées à un instant t et avant celui-ci d'une première métrique d'une paire de la première métrique et d'une deuxième métrique et une valeur mesurée avant l'instant t de la deuxième métrique pour prédire une valeur de la deuxième métrique à l'instant t, la destruction de corrélation étant détectée si une différence entre une valeur de la deuxième métrique prédite en entrant des valeurs mesurées de la paire de la première métrique et de la deuxième métrique dans la fonction de corrélation et une valeur mesurée de la deuxième métrique est égale ou supérieure à une valeur prédéterminée ;
la génération d'un modèle de destruction agrégé qui est obtenu en agrégeant des modèles de destruction de corrélation du même type parmi la pluralité de modèles de destruction de corrélation, les modèles de destruction de corrélation du même type étant des modèles de destruction de corrélation comprenant un nombre prédéterminé ou plus, ou un rapport prédéterminé ou plus de corrélations du même type, les corrélations du même type étant des corrélations ayant la même paire de types de métrique, un type de métrique pour une métrique étant une combinaison d'un groupe de dispositifs auquel appartient un dispositif surveillé comprenant la métrique et d'un élément de valeur de performance pour la métrique, le modèle de destruction agrégé étant un ensemble de corrélations agrégées obtenues en agrégeant des corrélations du même type parmi les modèles de destruction de corrélation du même type, les corrélations agrégées étant des paires de types de métrique par rapport aux corrélations du même type ; et
le calcul et l'émission d'une similarité entre le modèle de destruction agrégé et un modèle de destruction de corrélation détecté actuellement.

6. Procédé d'analyse de système selon la revendication 5, dans lequel
lors du calcul de la similarité, le calcul d'un nombre ou d'un rapport de corrélations agrégées parmi les corrélations agrégées comprises dans le modèle de destruction agrégé, qui sont du même type que des corrélations comprises dans le modèle de destruction de corrélation détecté actuellement, en tant que similarité.

7. Procédé d'analyse de système selon la revendication 6, dans lequel
lors du calcul de la similarité, dans un cas où les paires de types de métrique des corrélations agrégée et paires de types de métrique selon les corrélations comprises dans le modèle de destruction de corrélation détecté actuellement sont les mêmes, la détermination que les corrélations agrégées et les corrélations comprises dans le modèle de destruction de corrélation détecté actuellement sont du même type.

8. Procédé d'analyse de système selon la revendication 7, dans lequel
lors de la génération du modèle de destruction agrégé, la détermination que des corrélations ayant les mêmes paires de types de métrique et une différence de coefficients de corrélation dans une plage prédéterminée sont les corrélations du même type.

9. Support de stockage lisible par ordinateur sur lequel est enregistré un programme amenant un ordinateur à exécuter le procédé selon l'une quelconque des revendications 5 à 8 lorsque ledit programme est exécuté sur ledit ordinateur.
